# FASCICULE DE BREVET EUROPEEN

(11) **EP 0 568 457 B1**
(45) Date de publication et mention de la délivrance du brevet: **29.10.1997**
(21) Numéro de dépôt: 93401111.5
(22) Date de dépôt: 29.04.1993
(51) Int. Cl.: G02F 1/163, E06B 3/66

(54) **Procédé et dispositif d'alimentation d'un système électrochrome**
Verfahren und Gerät zur Stromversorgung eines elektrochromen Systems
Method and device for current supply of an electrochromic system

(30) Priorité: 30.04.1992 FR 9205323
(43) Date de publication de la demande: 03.11.1993
(73) Titulaire: SAINT-GOBAIN VITRAGE, 92400 Courbevoie (FR)
(72) Inventeur: Ripoche, Xavier, F-75018 Paris (FR); Ast, Marc, F-92260 Fontenay-Aux-Roses (FR)
(74) Mandataire: Muller, René

(56) Documents cités:
- EP-A- 0 078 463
- DE-A- 3 032 460
- DE-A- 3 528 285
- FR-A- 2 493 574
- US-A- 4 242 681
- PATENT ABSTRACTS OF JAPAN vol. 10, no. 198 (P-476) 11 juillet 1986; & JP-A-61 041 975

## Description

L'invention concerne un procédé d'alimentation d'un système électrochrome et un dispositif mettant en oeuvre ce procédé. L'invention s'applique à tout système électrochrome et notamment aux vitrages électrochromes.

Un système électrochrome est un système dont l'état de coloration peut être modifié sous l'effet d'un champ électrique. Il s'applique particulièrement au contrôle de l'apport solaire dans les bâtiments ou les habitacles des véhicules automobiles.

Un tel système comporte une couche d'un matériau dit électrochrome c'est-à-dire d'un matériau susceptible d'insérer de façon réversible des cations, en général des protons ou des ions lithium, et dont les états d'oxydation correspondant aux deux états inséré et désinséré présentent des états de coloration différents, dont dans le cas des vitrages, un état décoloré transparent.

Pour que cette insertion ou désinsertion se produise, il est nécessaire de disposer à côté de la couche de matériau électrochrome d'une source de cations et d'une source d'électrons, respectivement constituées par une couche d'un électrolyte à conductivité ionique et par une couche électroconductrice. De plus, le système comprend une contre-électrode capable elle-aussi d'insérer et de désinsérer des cations de façon réversible, et symétriquement par rapport à la couche de matériau électrochrome. Cette contre-électrode est, de façon préférée, également un matériau électrochrome, qui dans le cas des vitrages comporte deux états de coloration différents. Cette contre-électrode est choisie telle que les deux matériaux soient simultanément décolorés.

Pour cette contre-électrode, la source cationique est également la couche électrolytique et la source d'électrons est constituée par une seconde couche électroconductrice. Les deux couches électroconductrices forment les deux électrodes entre lesquelles est appliquée une différence de potentiel.

Cette différence de potentiel doit être suffisamment élevée, en valeur absolue, pour que les réactions d'insertion et de désinsertion des cations dans les couches de matériaux électrochromes puissent se produire. Par convention, nous parlerons de tension positive pour une coloration et de tension négative pour une décoloration. Si l'on choisit par exemple un système à conduction à base d'ions lithium avec comme matériau électrochrome et comme contre-électrode, respectivement l'oxyde de tungstène et l'oxyde de nickel, la coloration n'est thermodynamiquement possible que pour une différence de potentiel supérieure à environ 1 volt. La décoloration peut être accélérée si une différence de potentiel non nulle est appliquée. Les cinétiques de réactions sont alors plus rapides.Toutefois, cette différence de potentiel doit dans les deux cas être inférieure aux potentiels thermodynamiques d'autres réactions parasitaires.

Les valeurs pour l'exemple précité à température ambiante peuvent être fixées à 2 volts pour la réaction d'insertion des protons dans le trioxyde de tungstène et à - 1 volt pour la désinsertion.

Lors de l'alimentation du vitrage électrochrome sa coloration évolue en fonction du temps. La coloration est donc fonction du temps de passage du courant c'est-à-dire que le degré de coloration correspond à la quantité de charge insérée dans le matériau électrochrome. Il est donc possible d'obtenir tous les degrés de coloration en modulant le temps de commutation, c'est-à-dire le temps s'écoulant lors du passage d'un état de coloration à un autre état coloré ou décoloré.

Toujours en ce qui concerne l'exemple précité, lorsque l'état de départ du vitrage électrochrome est un état de référence connue pour un vitrage électrochrome il suffit de mesurer la charge délivrée par le circuit d'alimentation et, connaissant la charge correspondant au degré de coloration voulu, de couper l'alimentation dès que cette charge est atteinte. On peut mesurer la charge à l'aide d'un circuit intégrateur de courant. Une telle méthode est notamment décrite dans la demande de brevet EP-A-0 078 463.

Par contre, pour passer d'un état de coloration à un autre, il faut mémoriser la charge correspondant à ce changement et pour cela disposer d'une mémoire devant contenir les valeurs des quantités de charges nécessaires pour passer d'un état quelconque à n'importe quel autre, ou ce qui revient au même les temps de commutation correspondants. Ceci nécessite l'utilisation d'une carte à microprocesseurs et à mémoire.

Lorsque l'état de départ du vitrage électrochrome est un état coloré, la situation est d'autant plus délicate car il faut tenir compte de la quantité de charges déjà insérées. Or l'état de coloration ne correspond pas forcément à la quantité de charges insérées au préalable en raison du phénomène dit d'auto-décharge du vitrage électrochrome qui correspond à un retour vers l'état décoloré. Après un certain temps, il existe une incertitude en ce qui concerne la charge du vitrage et donc son état de coloration.

Il n'est en conséquence pas utile de mémoriser la quantité de charges délivrées par l'alimentation car elle n'est pas caractéristique de l'état de coloration aux temps longs. on ne peut pas prendre cette valeur comme point de départ lors d'une nouvelle consigne, puisque la quantité de charges insérées va diminuer.

Une solution envisageable pour déterminer l'état de coloration de départ serait de mesurer la transmission lumineuse et donc le degré de coloration au moyen d'une cellule photoélectrique et d'une source lumineuse placées de chaque côte du vitrage, de préférence loin des amenées de courant.

Partant de cette valeur de transmission lumineuse, on impose la nouvelle consigne de degré de coloration, en générant une première tension s'il s'agit d'une coloration ou une seconde tension s'il s'agit d'une décoloration, en modulant le temps de commutation, mais cette solution présente le grand inconvénient de nécessiter un appareillage pour mesurer le degré de coloration impliquant un câblage électrique supplémentaire. Notons que le dispositif avec cellule photoélectrique peut également permettre de déterminer la transmission lumineuse désirée lorsqu'elle est atteinte.

L'invention a pour but un procédé d'alimentation de vitrage électrochrome qui permet de moduler la coloration à des valeurs choisies sans utiliser d'importants dispositifs supplémentaires servant soit à mettre en mémoire les temps de commutation, soit à mesurer la transmission lumineuse pour en déduire la charge.

Ce problème, les auteurs de la présente invention l'ont résolu après avoir mis en évidence une étroite relation entre l'état de charge d'un vitrage électrochrome et son potentiel à l'abandon, c'est-à-dire le potentiel du vitrage à un instant donné, qui peut être bien sûr l'instant où l'on désire modifier sa coloration. Une telle relation n'était pas évidente car le potentiel est fonction de la densité de charges dans les couches minces. Or cette densité varie du fait de deux phénomènes d'homogénéisation, l'un sur la surface de la cellule, l'autre dans l'épaisseur des matériaux électrochromes. Tout d'abord, la résistance des couches électroconductrices d'un tel vitrage retarde l'homogénéisation surfacique des matériaux électrochrome et se traduit pendant la phase d'homogénéisation, par des bords plus colorés que le centre du vitrage. Dans le cas d'un vitrage d'un mètre-carré, une coloration uniforme pour l'oeil est obtenue après une ou deux minutes mais en fait, cette phase d'homogénéisation n'est totalement achevée qu'après un temps de l'ordre de 3-10 minutes pour des couches électroconductrices transparentes dont la résistance carrée est de l'ordre de 5 à 10 ohms et pour des vitrages d'une taille inférieure à 50 x 50 cm. D'autre part, il existe un phénomène diffusionnel des charges dans l'épaisseur des matériaux électrochromes. Mais les auteurs de la présente invention ont constaté que pour des vitrages de dimensions ordinaires, donc d'au moins 10 x 10 cm le phénomène le plus lent est de loin celui lié à la résistance des couches électroconductrices, et que le phénomène diffusionnel dans l'épaisseur, qui est de l'ordre de 10 secondes, n'est plus apparent bien avant la fin de la phase d'homogénéisation en surface.

Tant que l'on se trouve en phase d'homogénéisation, on assiste à une variation de potentiel sans variation de la charge du vitrage.

Par contre, dans le cas d'un vitrage d'une coloration homogène, on a une relation de proportionnalité entre le potentiel du vitrage électrochrome et sa charge. La constante de proportionnalité s'apparentant ainsi parfaitement à la capacité d'un condensateur. Par ailleurs, les auteurs de la présente invention ont de plus constaté que la valeur de cette « capacité » peut être considérée constante dans la gamme de températures qui nous intéresse et ne varie notamment pas lorsque la température du système passe de 20°c à 80°C.

Connaissant la valeur de capacité « C », il devient donc possible de définir l'état de charge du vitrage électrochrome par la simple mesure de son potentiel. L'état de charge initial sera ainsi déterminé à partir du potentiel à l'abandon. D'autre part, l'état de coloration voulu ou consigne de coloration défini par la transmission lumineuse du vitrage ou consigne de coloration correspondant à une quantité de charge donnée correspond également à un potentiel que l'on peut qualifier de potentiel de consigne.

La différence entre le potentiel de consigne et le potentiel à l'abandon multipliée par la « capacité » du vitrage électrochrome nous donne la charge à transférer.

Ainsi, selon l'invention, ce problème de la détermination de la charge du système à un moment donné et de la charge à lui apporter pour obtenir le degré de coloration voulu est résolu par un procédé d'alimentation d'un système électrochrome comme défini dans la revendication 1. Par vitrage électrochrome, on entend tout type de vitrages ayant une superficie d'au moins 100 cm², par exemple pour des applications du type rétroviseur pour véhicules automobiles, et pouvant atteindre plusieurs mètre-carrés pour des applications dans le bâtiment.

Pour obtenir la coloration voulue, il est possible d'imposer la tension de coloration correspondante.

Cette solution n'est pas préférée car il est plus simple, en ce qui concerne le dispositif d'alimentation, de travailler suivant soit une tension de coloration soit une tension de décoloration de façon à colorer ou décolorer le vitrage électrochrome le plus rapidement possible. Ces tensions sont de préférence de signes opposés. Elles peuvent être constantes ou variables en fonction du temps comme décrit par exemple dans la demande de brevet européen 408 427. Les profils de ces tensions peuvent dépendre de la température.

Selon l'invention, l'alimentation du système électrochrome se fait suivant soit un profil de potentiel de coloration soit un profil de potentiel de décoloration.

Comme indiqué plus haut, la tension à l'abandon n'est significative de la charge du système qu'après un temps d'homogénéisation. Il est donc avantageux d'interdire la mesure du potentiel à l'abandon pendant le temps de coloration ou de décoloration plus le temps d'homogénéisation. Pour permettre néanmoins de modifier la consigne de coloration avant la fin de cette homogénéisation, il est avantageux de toujours avoir en mémoire la tension à l'abandon lors de l'alimentation pour la conserver comme référence de départ. Ceci peut être réalisé en utilisant un condensateur à haute résistance de fuite, par exemple 10¹² ohms, que l'on trouvera facilement dans le commerce. Ce type de mise en mémoire, analogique, évite l'utilisation d'un microprocesseur.

Cette mise en mémoire du potentiel à l'abandon est avantageusement effectuée avant que le système électrochrome ne soit alimenté.

Grâce à cette mise en mémoire, si la consigne de coloration est modifiée avant l'homogénéisation du vitrage, le transfert de charges va pouvoir être poursuivi sur la base de la nouvelle valeur calculée en tenant compte bien sûr des charges déjà transférées ce qui implique une non réinitialisation du compte-charges. Une telle mesure est possible car sur un temps aussi bref que le temps d'homogénéisation, le phénomène d'auto-décharge est totalement négligeable.

Il est également possible pour compenser le phénomène d'auto-décharge du vitrage électrochrome de le recolorer à la consigne de coloration voulue.

Pour cela, une variante du procédé selon l'invention est que, après un temps qui expérimentalement correspond à un certain seuil d'auto-décharge, la coloration se déclenche automatiquement, maintenant ainsi une coloration à peu près constante.

Le procédé selon l'invention permet d'obtenir une consigne de degré de coloration quel que soit l'état de départ du vitrage électrochrome et de maintenir la coloration de consigne dans le temps.

Ce procédé présente l'avantage de pouvoir être mis en oeuvre simplement à l'aide de circuits analogiques. Il n'est pas nécessaire d'utiliser une carte à microprocesseurs.

L'invention propose également un dispositif permettant la mise en oeuvre de ce procédé. Ce dispositif est défini dans la revendication 7.

Comme indiqué plus haut, ce condensateur peut également servir à la mise en mémoire du potentiel à l'abandon.

Le circuit d'alimentation comporte de préférence un commutateur de sélection entre une première tension pour la coloration et une seconde tension pour la décoloration.

De préférence encore, ce circuit d'alimentation est conçu de manière telle que l'interrupteur qui permet de connecter le condensateur servant à la mise en mémoire du potentiel à l'abandon soit fermé puis ouvert avant que l'interrupteur qui permet d'alimenter le système électrochrome ne se ferme. Un composant électronique tel qu'une bascule peut par exemple commander ces deux interrupteurs. Une bascule est un élément à deux entrées et une sortie. Des impulsions arrivant par l'une ou l'autre des entrées correspondant soit à une initialisation soit à une remise à zéro sont traduites respectivement en des états logiques "1" et "0" qui apparaissent en sortie.

Une amélioration du dispositif est qu'il peut comporter un moyen bloquant la mesure du potentiel à l'abandon pendant le temps de coloration ou décoloration plus le temps d'homogénéisation. Ce temps total est inférieur à 15 minutes pour un vitrage de 50 x 50 cm avec une résistance carrée des couches électroconductrices de 5 à 10 ohms.

Une seconde amélioration du dispositif est qu'il peut comporter un moyen qui déclenche automatiquement la coloration du système électrochrome lorsque celui-ci dépasse un seuil d'auto-décharge.

D'autres détails et caractéristiques avantageuses de l'invention ressortent ci-après de la description d'un exemple de dispositif mettant en oeuvre ce procédé décrit en référence aux figures 1, 2 et 3 qui représentent :
- figure 1, le montage d'un dispositif selon l'invention sur un vitrage électrochrome,
- figure 2, un schéma de base de ce dispositif,
- figure 3, un schéma d'un autre mode de réalisation du dispositif.

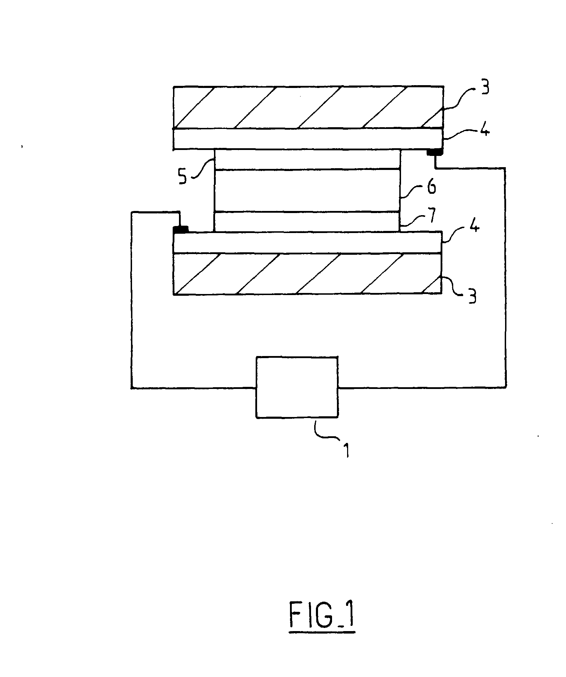

La figure 1 décrit le branchement d'un dispositif d'alimentation 1 selon l'invention sur un vitrage électrochrome 2.

Le vitrage électrochrome est composé entre les deux feuilles de verre 3 de deux couches électroconductrices 4 entre lesquelles on trouve le matériau électrochrome 5 notamment une couche d'oxyde de tungstène, un électrolyte 6 et une contre électrode 7 qui comme nous l'avons vu peut être également un matériau électrochrome.

La différence de potentiel se fait entre deux contacts électriques, l'un sur l'une des couches électroconductrices et l'autre diagonalement opposé au premier sur la seconde couche électroconductrice.

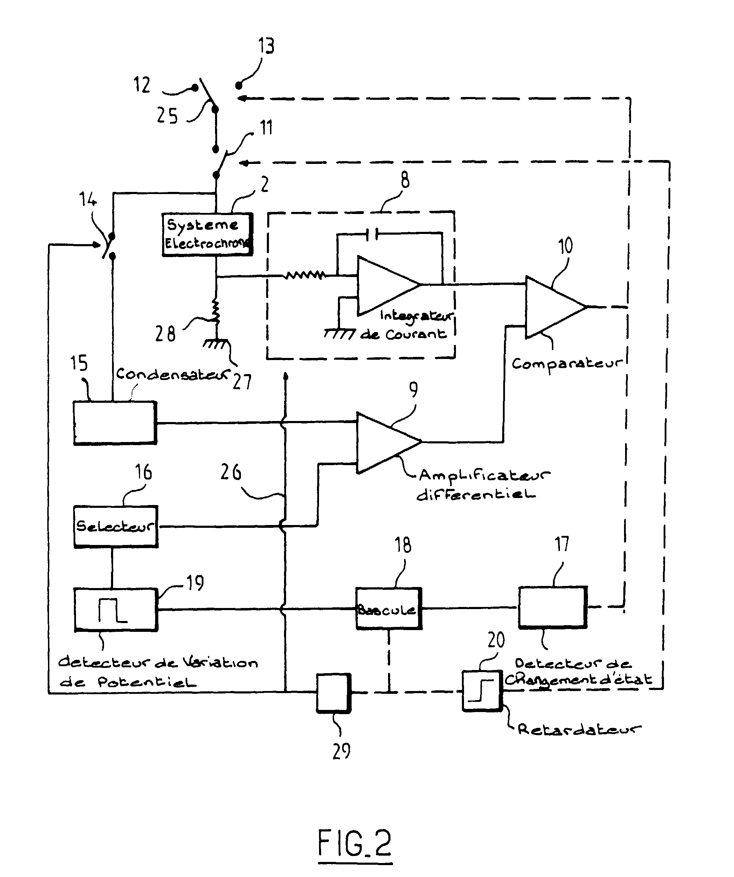

Le dispositif d'alimentation selon l'invention est décrit en référence à la figure 2 où on a représenté en traits continus les lignes correspondant à des signaux de commandes et en pointillés les lignes correspondant à des états logiques. Ce dispositif d'alimentation comporte essentiellement un intégrateur de courant 8, un amplificateur différentiel 9, un comparateur 10, un générateur pouvant délivrer une tension de coloration 12 ou de décoloration 13, un condensateur 15, un sélecteur 16, un détecteur de changement d'état 17 et une bascule 18.

Ce dispositif d'alimentation permet d'alimenter le vitrage électrochrome 2, relié à une masse 27, et de mesurer la charge le traversant à l'aide de l'intégrateur de courant 8, muni d'une remise à zéro, et d'une résistance de mesure 28.

D'autre part, l'amplificateur différentiel 9 détermine à partir du potentiel de consigne et du potentiel à l'abandon, la charge à faire passer dans le vitrage électrochrome 2.

Le comparateur analogique 10, permet ensuite de déterminer s'il faut colorer ou décolorer le vitrage électrochrome 2 et à quel moment, on atteint la valeur de consigne.

Le vitrage électrochrome 2 peut être alimenté, lorsque l'interrupteur 11 est en position fermée, suivant la tension de coloration 12 ou la tension de décoloration 13 suivant la position du commutateur 25. Lors de l'alimentation, on mesure la charge traversant le vitrage électrochrome à l'aide de l'intégrateur de courant 8.

Nous allons maintenant revenir en détail sur le schéma de base de la figure 2, en illustrant son fonctionnement dans le cas où la commutation est déclenchée longtemps après la dernière commutation, donc dans le cas d'une coloration initiale homogène.

A l'aide du sélecteur 16, par exemple du type interrupteur multipositions ou curseur, l'opérateur choisit une tension de consigne correspondant à la coloration souhaitée. Il va de soi que pour tout dispositif commercial, le sélecteur comportera des graduations correspondant à différents niveaux de coloration même si le signal en sortie du sélecteur 16 est toujours une valeur de tension de consigne.

Cette action sur le sélecteur 16 a immédiatement pour effet la fermeture de l'interrupteur 14, via le détecteur de variation de potentiel 19 et la bascule 18 sur les rôles desquels il sera revenu plus loin. Simultanément, l'intégrateur 8 est remis à zéro par la ligne 26. Avec un léger retard dû au retardateur 20, par exemple du type monostable, l'interrupteur 11 est fermé plaçant ainsi effectivement le système électrochrome 2 sous alimentation.

Pendant ce temps de retard, le système électrochrome est ainsi connecté au condensateur 15 de sorte que le potentiel du condensateur 15 corresponde au potentiel du vitrage à ce moment zéro, donc au potentiel à l'abandon. Pour que la décharge du vitrage soit pratiquement négligeable, il importe que la capacité du condensateur 15 soit elle-même très faible, ce qui est le cas dans la pratique car la capacité d'un vitrage électrochrome est supérieure à 5 mF/cm². De plus, si la résistance de fuite de ce condensateur est très grande, le potentiel à ses bornes va rester pratiquement constant pendant une durée assez longue ce qui correspond bien à une mise en mémoire temporaire du condensateur. A titre indicatif, on utilise un condensateur d'une capacité de 0,1 µF et d'une résistance de fuite de 10¹² ohms.

Cette mesure du potentiel à l'abandon doit être effectuée uniquement durant ce temps de retard. Pour cela, l'interrupteur 14 peut être commandé par un circuit monostable 29, dont la durée de l'impulsion est inférieure au temps de retard. De cette façon, l'interrupteur 14 est fermé puis ouvert avant la fermeture de l'interrupteur 11.

Toujours dans cette première phase précédant la fermeture de l'interrupteur 11, la charge à transférer, et son signe donc en l'espèce le fait de savoir si on doit procéder à une coloration ou une décoloration, sont déterminées au moyen de l'amplificateur différentiel 9, de l'intégrateur de courant 8 et du comparateur 10.

L'amplificateur différentiel 9 possède de préférence une haute impédance d'entrée par exemple 10¹² ohms de façon à ne pas décharger le condensateur 15 et un gain de préférence identique à la capacité du vitrage électrochrome de sorte qu'il délivre en sortie un signal égal à C (Uc-Ua) où Uc est le potentiel de consigne délivré par le sélecteur 16, Ua le potentiel à l'abandon mesuré par le condensateur 15 et C la capacité du vitrage, donc autrement dit un signal directement égal à la charge à transférer.

L'intégrateur de courant 8 ayant été remis à zéro par l'intermédiaire du monostable 29, le comparateur 10 va ainsi déterminer le "signe" de la charge et le commutateur 25 s'enclencher sur l'une ou l'autre des positions 12 et 13. Le retard généré par le retardateur 20 est tel que ce n'est qu'une fois ce commutateur 25 enclenché qu'est fermé l'interrupteur 11.

Débute alors la phase effective de coloration ou de décoloration.

Durant cette phase, l'intégrateur de courant 8 mesure la charge qui traverse le vitrage électrochrome 2. A tout moment, durant cette phase, le comparateur 10 compare cette valeur à la charge à transférer C (Uc-Ua).

Le comparateur 10 peut prendre deux états logiques "0" et "1" en fonction des différences de potentiel entre ses deux entrées. Lorsque la quantité de charges mesurée par l'intégrateur est égale à la charge à transférer C (Uc-Ua), le comparateur 10 change d'état et modifie la position du commutateur 25. Cette situation correspond en fait au moment où l'on obtient la tension de consigne.

Le comparateur 10 par l'intermédiaire d'un détecteur de changement d'état 17, de la bascule 18 et du retardateur 20 a pour effet de rouvrir l'interrupteur 11. L'alimentation du vitrage électrochrome 2 est alors suspendue.

Ayant ainsi retracé le fonctionnement du dispositif selon le schéma de base de la figure 2, revenons en détail sur certains éléments.

Le détecteur de changement d'état 17 complète le comparateur 10. Celui-ci, ne connaissant que deux états logiques que l'on utilise pour les états de coloration et de décoloration, ne permet pas lui-même de stopper l'alimentation du vitrage électrochrome. Le détecteur de changement d'état 17 permet, lorsque l'intégrateur de courant 8 a mesuré la charge de consigne et que le comparateur 10 passe successivement d'un état à l'autre, de constater et de transmettre cette information à la bascule 18 qui passe à l'état correspondant à la position ouverte de l'interrupteur 11.

Par ailleurs, comme nous l'avons vu précédemment, la bascule 18 passe à l'état correspondant à la position fermée de l'interrupteur 11 et donc la mise sous tension du vitrage électrochrome 2 par l'intermédiaire d'un détecteur de variation de potentiel 19 suivant l'action du sélecteur 16.

Le détecteur de variation de potentiel 19 peut être, par exemple, soit un circuit dérivateur qui détecte une vitesse de variation de potentiel, soit un amplificateur différentiel qui détecte une variation de potentiel à l'aide de l'ancien potentiel de consigne mis en mémoire préalablement. Dans les deux cas, cela déclenche un monostable dont le signal met la bascule 18 dans l'état correspondant à l'alimentation.

Le monostable du détecteur de variation de potentiel 19 émet avantageusement un signal après un temps de retard de façon à ce que l'éventuel changement d'état du comparateur 10 lorsqu'il détermine s'il s'agit d'une coloration ou d'une décoloration, ou bien lorsque l'on modifie la consigne avant d'avoir atteint la charge désirée, ce qui peut inverser l'état du comparateur 10, ne perturbe pas l'opération de coloration ou de décoloration.

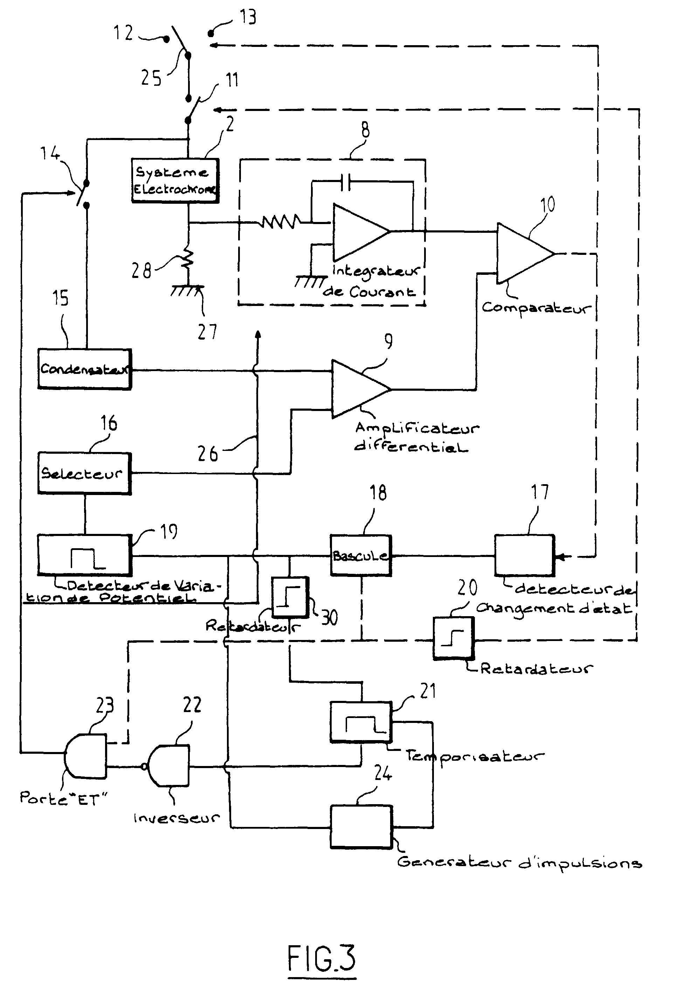

Le circuit d'alimentation présenté à la figure 3 décrit une autre variante de réalisation du dispositif selon l'invention apportant encore quelques amélioriations.

Tout d'abord, il doit s'écouler un certain temps avant que le vitrage électrochrome ne s'homogénéise au degré de coloration voulu. Durant ce temps, le potentiel à l'abandon n'est pas représentatif de la coloration voulue mais uniquement de celle des bords du vitrage, qui sont plus teintés que le centre.

Si l'opérateur décide de modifier sa consigne pendant cet intervalle de temps, le réglage ne serait pas celui désiré car le potentiel à l'abandon mesuré ne sera pas correct.

Pour y remédier, il est possible de coupler le sélecteur 16 à un dispositif non représenté sur les figures, permettant de bloquer le sélecteur 16, durant la période de changement de coloration et la phase d'homogénéisation.

Il peut être plus intéressant de modifier le circuit et permettre de ne mesurer le potentiel à l'abandon que lorsque le vitrage électrochrome est homogénéisé. Par suite, pour permettre un réglage, c'est-à-dire proposer une nouvelle valeur du potentiel de consigne pendant la phase d'homogénéisation, on utilise le potentiel à l'abandon déjà mis en mémoire, sans remettre à zéro l'intégrateur 8.

Ceci est réalisé par exemple sur le circuit de la figure 3, identique au circuit de la figure 2 pour tous les éléments portant les mêmes signes de référence et auquel on a ajouté un temporisateur qui peut être par exemple un monostable 21 qui bloque l'instruction de la bascule quant à la fermeture de l'interrupteur 14 et la remise à zéro de l'intégrateur 8, jusqu'à la fin de l'homogénéisation.

Ce temporisateur 21 est, par exemple, déclenché par le signal du détecteur de variation de potentiel 19 après un retard pour permettre une mise en mémoire du potentiel à l'abandon si la coloration est homogène au moment de la nouvelle consigne. Pour cela, on rajoute un retardateur 30. Le temporisateur émet donc après un retard un signal pendant le temps correspondant au moins à la coloration ou décoloration voulue plus le temps d'homogénéisation.

Ce signal peut être inversé par un inverseur 22. Une porte "Et" compare ce signal et l'état de la bascule.

Dans le cas où l'on n'est pas en phase de coloration ou de décoloration ni d'homogénéisation, la porte "Et" 23 émet un signal et ferme l'interrupteur 14 qui met en mémoire le potentiel à l'abandon et l'intégrateur 8 se remet à zéro.

Dans le cas contraire, la sortie de la porte "Et" 23 reste à l'état "0". L'interrupteur 14 ne se ferme pas et l'intégrateur 8 n'est pas remis à zéro. Le procédé consiste alors à comparer à l'aide du comparateur 10 la nouvelle charge de consigne et la charge traversant le vitrage électrochrome en tenant compte de la charge déjà passée avant la nouvelle consigne puisque l'intégrateur 8 n'est pas remis à zéro.

Dans un premier temps, le comparateur peut être amené à agir sur le commutateur 25 si l'on passe d'un état de coloration à un état de décoloration ou réciproquement.

Un tel procédé permettant l'application d'un nouveau potentiel de consigne au vitrage électrochrome notamment durant la phase d'homogénéisation, donne de bons résultats car le phénomène d'auto-décharge est négligeable pendant ce temps.

Par ailleurs, si on se place sur une échelle de temps plus grande, où le phénomène d'autodécharge peut devenir gênant, il est avantageux de prévoir que le procédé s'auto-déclenche lorsque la décoloration devient sensible à l'oeil, par exemple, afin de retrouver la coloration voulue.

Pour cela, on peut améliorer le dispositif avec un élément supplémentaire permettant de provoquer une recoloration du vitrage électrochrome à la coloration voulue.

On utilise par exemple un générateur d'impulsions 24 qui au bout d'un temps déterminé, correspondant par exemple à la décoloration sensible à l'oeil, émet une impulsion vers la bascule 18, ce qui déclenche le procédé. Le générateur d'impulsions 24 est commandé par le temporisateur 21 de façon à ce que le générateur d'impulsions 24 se déclenche à la fin du signal émis par le temporisateur 21. Lorsque le générateur d'impulsions 24 se déclenche, l'impulsion n'est émise qu'après un temps déterminé, correspondant à la décoloration sensible à l'oeil, par exemple.

Le procédé et le dispositif selon l'invention permettent donc sous la forme de circuits analogiques de passer d'un état de coloration d'un vitrage électrochrome à un autre état voulu. Ils permettent également de maintenir le vitrage électrochrome dans l'état de coloration voulu.

Les techniques antérieures ne permettaient cette opération qu'à l'aide d'un système coûteux et techniquement difficile à installer permettant de définir l'état de charge du vitrage électrochrome et d'un microprocesseur.

L'invention évite donc des éléments coûteux, encombrants et nécessitant une installation souvent difficile.

## Revendications

1. Procédé d'alimentation d'un système électrochrome du type vitrage électrochrome, possédant une relation de proportionnalité U·C = Q entre le potentiel du système électrochrome U, mesuré après homogénéisation surfacique du matériau électrochrome, et la charge Q insérée dans le matériau électrochrome, « C » étant la constante de proportionnalité propre au système électrochrome, procédé dans lequel le potentiel à l'abandon Uₐ est mesuré après homogénéisation du matériau électrochrome, le potentiel de consigne U_{c} correspondant à la consigne de coloration voulu est selectionné, et la charge à transférer Q = C · (U_{c}-Uₐ) est délivrée et insérée dans le matériau électrochrome.

2. Procédé selon la revendication 1 dans lequel l'alimentation du système électrochrome se fait suivant soit un profil de potentiel de coloration soit un profil de potentiel de décoloration

3. Procédé selon l'une des revendications précédentes, dans lequel le potentiel à l'abandon du système électrochrome mesuré après homogénéisation est mis en mémoire.

4. Procédé selon la revendication 3, dans lequel la mise en mémoire du potentiel à l'abandon est effectué avant que le système électrochrome ne soit alimenté.

5. Procédé selon l'une des revendications précédentes, dans lequel la mesure du potentiel à l'abandon est interdite pendant le temps de coloration ou de décoloration plus le temps d'homogénéisation.

6. Procédé selon l'une des revendications précédentes, dans lequel, après un temps qui expérimentalement correspond à un seuil d'auto-décharge, la coloration se déclenche automatiquement.

7. Dispositif d'alimentation d'un système électrochrome (2) du type vitrage électrochrome possédant une relation de proportionnalité U·C = Q entre le potentiel du système électrochrome U, mesuré après homogénéisation, et la charge Q insérée dans le matériau électrochrome, « C » étant la constante de proportionnalité propre au système électrochrome (2), comportant un générateur pouvant délivrer une tension de coloration ou de décoloration, un intégrateur (8) mesurant la charge traversant le système électrochrome (2) et la comparant à l'aide d'un comparateur (10) à la charge à transférer, et un amplificateur différentiel (9) calculant à partir du potentiel de consigne U_{c} correspondant à la valeur de la consigne de coloration imposée par un sélecteur (16) et du potentiel Uₐ à l'instant où l'on désire modifier la coloration mesuré par un condensateur (15), la charge à transférer dans le matériau électrochrome Q = C(U_{c}-Uₐ).

8. Dispositif selon la revendication 7, dans lequel ledit générateur impose une tension (12) pour la coloration ou une tension (13) pour la décoloration.

9. Dispositif selon les revendications 7 ou 8, dans lequel le condensateur (15) a une résistance de fuite grande de sorte que le potentiel à l'abandon est ainsi mis en mémoire.

10. Dispositif selon l'une des revendications 7 à 9, comportant un retardateur (20) de sorte que le condensateur (15) est connecté au système électrochrome (2) pendant un court instant précédant la connexion du système électrochrome (2) au générateur.

11. Dispositif selon l'une des revendications 7 à 10, comportant un moyen bloquant la mesure du potentiel à l'abandon pendant le temps de coloration ou décoloration plus le temps d'homogénéisation.

12. Dispositif selon l'une des revendications 7 à 11, comportant un moyen qui déclenche automatiquement la coloration du système électrochrome lorsque celui-ci dépasse un seuil d'auto-décharge.

## Patentansprüche

1. Verfahren zur Versorgung eines Elektrochromsystemes in der Art einer Elektrochromverglasung, mit einem Proportionalitätsverhältnis U.C = Q zwischen dem Elektrochromsystem U, gemessen nach der Oberflächenhomogenisierung des Elektrochrommateriales und der Ladung Q, die in das Elektrochrommaterial eingeführt ist, wobei »C« die eigene Proportionalitätskonstante des Elektrochromsystemes ist, eine Verfahren, bei dem das Abgabepotential Uₐ nach der Homogenisierung des Elektrochrommateriales gemessen wird, das Auftragspotential Uc, welches mit dem gewünschten Farbauftrag korrespondiert, gewählt wird und die zu übertragende Ladung Q = C(U_{c}-Uₐ) an das Elektrochrommaterial abgegeben und in dieses eingeführt wird.

2. Verfahren nach Anspruch 1, **dadurch gekennzeichnet, daß** die Versorgung des Elektrochromsystemes entweder gemäß einem Potentialprofil der Coloration oder einem Potentialprofil der Decoloration erfolgt.

3. Verfahren nach einem der vorhergehenden Ansprüche, bei dem das Abgabepotential des Elektrochromsystemes, gemessen nach der Homogenisierung, gespeichert wird.

4. Verfahren nach Anspruch 3, bei dem die Speicherung des Abgabepotentiales durchgeführt wird, bevor das Elektrochromsystem nicht mehr versorgt wird.

5. Verfahren nach einem der vorhergehenden Ansprüche, bei dem die Messung des Abgabepotentiales während der Zeit der Coloration oder Decoloration gesperrt ist sowie während der Zeit der Homogenisierung.

6. Verfahren nach einem der vorhergehenden Ansprüche, bei dem nach einer Zeit, die experimentell einer Auto-Entladungsschwelle entspricht, sich die Coloration automatisch auslöst.

7. Vorrichtung zur Versorgung eines Elektrochromsystemes (2) in der Art einer Elektrochromverglasung, mit einem Proportionalitätsverhältnis U.C = Q zwischen dem Elektrochromsystem U, gemessen nach der Oberflächenhomogenisierung des Elektrochrommateriales und der Ladung Q, die in das Elektrochrommaterial eingeführt ist, wobei »C« die eigene Proportionalitätskonstante des Elektrochromsystemes (2) ist, mit einem Generator, der eine Colorations- oder Decolorationsspannung abgeben kann, einem Integrator (8), der die Ladung mißt, die durch das Elektrochromsystem fließt und diese mit Hilfe eines Vergleichers (10) mit der übertragenen Ladung vergleicht und mit einem Differentialverstärker (9), der ausgehend von dem Auftragspotential U_{c}, welches mit dem Farbauftragswert korrespondiert, mit dem eine Wähleinrichtung (16) beaufschlagt ist, und dem Potential Uₐ im Moment in dem man die durch einen Kondensator (15) gemessene Coloration verändern möchte, die auf das Elektrochrommaterial zu übertragende Ladung Q = C(U_{c}-Uₐ) berechnet.

8. Vorrichtung nach Anspruch 7, bei der der Generator eine Spannung (12) für die Coloration anlegt oder eine Spannung (13) für die Decoloration.

9. Vorrichtung nach Anspruch 7 oder 8, bei der der Kondensator (15) einen großen Entladungswiderstand hat, so daß das Abgabepotential ebenfalls gespeichert wird.

10. Vorrichtung nah einem der Ansprüche 7 bis 9, mit einem Verzögerungsglied (20), so daß der Kondensator (15) während eines kurzen Momentes vor der Verbindung des Elektrochromsystems (2) mit dem Generator mit dem Elektrochromsystem (2) verbunden ist.

11. Vorrichtung nach einem der Ansprüche 7 bis 10, mit einer Einrichtung, die die Messung des Abgabepotentiales während der Zeit der Coloration oder Decoloration sowie während der Homogenisierung blockiert.

12. Vorrichtung nach einem der Ansprüche 7 bis 11, mit einer Einrichtung, um die Coloration des Elektrochromsystemes automatisch auszulösen, wenn dieses eine der Auto-Entladungsschwelle überschreitet.

## Claims

1. A method of powering an electrochrome system for electrochrome glass, having a relationship of proportionality U.C. = Q between potential U of the electrochrome system, measured after surface homogenisation of the electrochrome material, and charge Q inserted in the electrochrome material, "C" being the proportionality constant specific to the electrochrome system, in which procedure random potential Uₐ is measured after homogenisation of the electrochrome material, set potential U_{c} corresponding to the desired colouring setting is selected and charge Q = C(U_{c}-Uₐ) to be transferred is delivered and inserted in the electrochrome material.

2. A method according to claim 1 in which powering of the electrochrome system is carried out according to either a colouring potential profile or a decolouring potential profile.

3. A method according to one of the previous claims, in which the random potential of the electrochrome system measured after homogenisation is stored in memory.

4. A method according to claim 3, in which storage in memory of the random potential is carried out before the electrochrome system is powered.

5. A method according to one of the previous claims, in which measurement of the random potential is precluded during the period of colouring or decolouring plus the period of homogenisation.

6. A method according to one of the previous claims, in which, after a period which corresponds experimentally to a self-discharge threshold, colouring is triggered automatically.

7. Apparatus for powering an electrochrome system (2) of electrochrome window type, having a relationship of proportionality U.C. = Q between potential U of the electrochrome system, measured after homogenisation, and charge Q inserted in the electrochrome material, "C" being the proportionality constant specific to electrochrome system (2), comprising a generator capable of delivering a colouring or decolouring voltage, an integrator (8) measuring the charge passing through electrochrome system (2) and comparing it with the aid of a comparator (10) to the charge to be transferred, and a differential amplifier (9) calculating - from set potential U_{c} corresponding to the set value of colouring imposed by a selector switch (16) and from potential Uₐ at the moment when it is desired to modify the colouring imposed by a capacitor (15) - the charge Q = C(U_{c}-Uₐ) to be transferred to the electrochrome material.

8. Apparatus according to claim 7, in which said generator imposes a voltage (12) for colouring or a voltage (13) for decolouring.

9. Apparatus according to claims 7 or 8, in which the capacitor (15) has a high leakage resistance so that the random potential is then stored in a memory.

10. Apparatus according to one of claims 7 to 9, comprising a delay (20) so that the capacitor (15) is connected to the electrochrome system (2) for a brief moment preceding connection of the electrochrome system (2) to the generator.

11. Apparatus according to one of claims 7 to 10, comprising means to preclude measurement of the random potential during the period of colouring or decolouring plus the period of homogenisation.

12. Apparatus according to one of claims 7 to 11, comprising means which automatically trigger the colouring of the electrochrome system when the latter exceeds a self-discharge threshold.
